# EUROPEAN PATENT SPECIFICATION

(11) **EP 1 191 204 B1**
(45) Date of publication and mention of the grant of the patent: **29.04.2009**
(21) Application number: 01307322.6
(22) Date of filing: 29.08.2001
(51) Int. Cl.: F02C 6/18, F24F 3/14, F24F 3/147, F24F 12/00, F02C 7/10, F28D 5/00

(54) **A co-generation system and a dehumidification air-conditioner**
Kogenerationssystem und entfeuchtende Klimaanlage
Systeme de cogénération et dispositif de conditionnement déhumidificant

(30) Priority: 26.09.2000 JP 2000291591
(43) Date of publication of application: 27.03.2002
(73) Proprietor: Seibu Giken Co., Ltd., Kasuya-gun, Fukuoka-ken 811-31 (JP)
(72) Inventor: Okano, Hiroshi, Fukuoka city, Fukuoka (JP); Kawakami, Yukito, Fukuoka city, Fukuoka (JP); Nagamatsu, Mototsugu, Fukuoka city, Fukuoka (JP)
(74) Representative: Johnson, Terence Leslie

(56) References cited:
- EP-A- 0 773 412
- EP-A- 1 132 595
- WO-A-00/00774
- WO-A-87/05683
- WO-A-99/51918
- GB-A- 1 273 766
- US-A- 4 384 634
- US-A- 5 953 926
- PATENT ABSTRACTS OF JAPAN vol. 2000, no. 04, 31 August 2000 (2000-08-31) -& JP 2000 008882 A (HITACHI LTD), 11 January 2000 (2000-01-11)
- PATENT ABSTRACTS OF JAPAN vol. 1999, no. 10, 31 August 1999 (1999-08-31) -& JP 11 132500 A (EBARA CORP), 21 May 1999 (1999-05-21)

## Description

The invention relates to a dehumidification air-conditioner which may be used with an internal combustion engine co-generation system which can generate electricity by combining an internal combustion engine and dynamos, such as a gas turbine co-generation system and a small gas turbine, a reciprocating engine, etc. which are used for an about [30kw-60kw] small dynamo etc., and which uses an internal combustion engine's waste heat further, and an improved co-generation system.

A small gas turbine has been developed in recent years, and has been proposed as an emergency power supply, or as a dynamo for co-generation. This is because the price of a small gas turbine is relatively low, and has a high degree of purity of exhaust gas etc. Moreover, a gas turbine dynamo in which continuous operation is possible has also been developed, without requiring frequent maintenance.

Even in the case where such a turbine is installed as an emergency power supply, and is in continuous operation every day, sometimes electric power supplied to a power supply line changes output to an extraordinary power supply line momentarily at the time of a power failure. Even the gas turbine takes several minutes to start by performing continuous operation every day, when a power failure occurs, electric power can be momentarily supplied to an extraordinary power supply line.

Co-generation systems are disclosed in WO87/05683 and EP 1132595. Specifically, WO87/05683 discloses a combustion engine, a dynamo, a casing around the combustion engine and a dehumidifying part. The present invention is characterised by mixing means for mixing heated air as it passes through the casing of the combustion engine and providing the hot air flow for the desorption of said dehumidifying part.

Moreover, by usually supplying electric power to a power supply line, contract electric power from an electric power supply company is reduced, and a cost reduction can be achieved on a daily basis.

The invention is hereinafter described, by way of example, with reference to the accompanying drawings.
Fig. 1 is diagram showing an example of a conventional gas turbine co-generation system;
Fig. 2 is a sectional view of a conventional dehumidification air-conditioner;
Fig. 3 is a perspective view of a dehumidification rotor and a conventional dehumidification air-conditioner, or a rotational type sensible-heat exchange element;
Fig. 4 is a flow diagram showing a gas turbine co-generation system;
Fig. 5 is a perspective view of a desiccant air-conditioning unit used for the gas turbine co-generation system;
Fig. 6 is a sectional view showing an example of a honeycomb object used for the gas turbine co-generation system;
Fig. 7 is a flow diagram for the first embodiment of internal combustion engine co-generation system according to the invention;
Fig. 8 is a flow diagram showing a second embodiment of internal combustion engine co-generation system according to the invention;
Fig. 9 us a flow diagram showing a third embodiment of internal combustion engine co-generation system according to the invention;
Fig. 10 is a sectional view showing a first embodiment of dehumidification air-conditioner according to the invention;
Fig. 11 is a perspective view of an intersected (perpendicular) type sensible-heat exchange element used for the dehumidification air-conditioner according to the invention;
Fig. 12 is a sectional view showing a second embodiment of dehumidification air-conditioner according to the invention;
Fig. 13 is a sectional view showing a third embodiment of dehumidification air-conditioner according to the invention; and
Fig. 14 is a sectional view showing a fourth embodiment of dehumidification air-conditioner according to the invention.

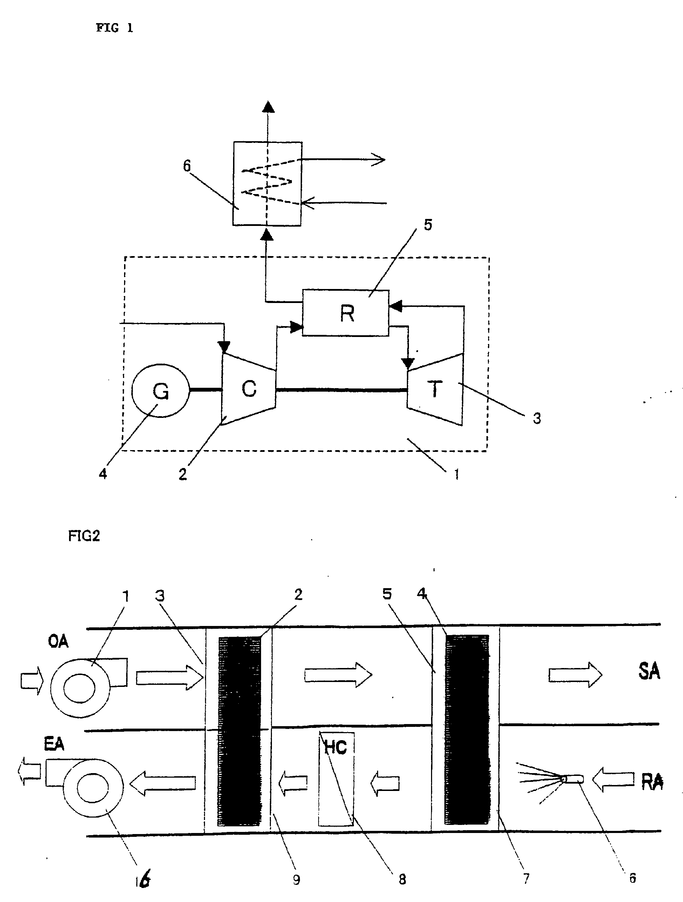

Referring to the drawings there is shown in Fig. 1 an example of a conventional small gas turbine dynamo. In a gas turbine unit 1, there is a turbine 3 by which axial combination is carried out with a compressor 2 which compresses outside ambient air OA (Fig. 2), and the compressor 2.

Moreover, a dynamo 4 is in axial combination with the axis of the turbine 3, whereby torque is generated.

Moreover, heat exchange is performed between the outside air OA compressed by the compressor 2, and the exhaust gas EA(Fig. 2) of the turbine 3, the air passed to turbine 3 from the compressor 2 is heated by the heat of exhaust gas EA, there being a heat exchanger 5 for raising efficiency. The thermal efficiency of the gas turbine unit 1 is about 30%.

That is, the rate of the electric power generated with a dynamo 4 to the energy which the required fuel has is about 30%. Since the energy conversion efficiency of the gas turbine unit 1 is bad, a boiler 6 is formed, which collects the thermal energies from the exhaust gas has as warm water. Synthetic energy efficiency is improved by this to about 70%. On the other hand, an internal combustion engine co-generation system is generated using an internal combustion engine, and high thermal efficiency is obtained by using an internal combustion engine's waste heat further.

That is, in order to discharge hot exhaust gas at 200°C or more, warm water is obtained by using this exhaust gas as a heat source of a boiler in an internal combustion engine, especially a gas turbine. Therefore, although the electric energy obtained by power generation is about 25%-35% generally when energy of combustion of fuel is substantially 100%, total energy efficiency becomes about 70% by using the heat of an exhaust gas for supply of warm water etc.

That is, as compared with the case where only the electric power which a dynamo generates is used, marked thermal efficiency can be obtained by supplying warm water. Since a dehumidification air-conditioner uses heat as the point which does not use chlorofluocarbon, and a drive energy source, it can use a variety of energies, such as combustion heat of a gas, exhaust heat, or solar heat, etc.

Therefore, discharge of carbon dioxide can be decreased. Moreover, the electric power demand load peak for summer can be lowered. Thus, the dehumidification air-conditioner has many features.

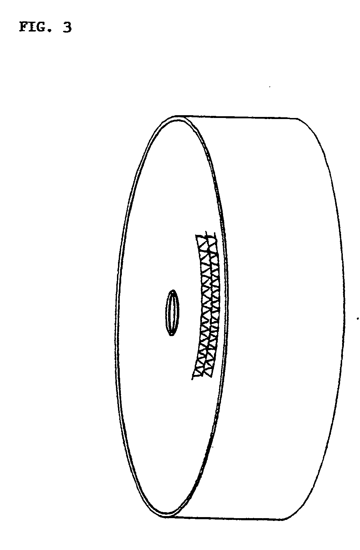

A conventional dehumidification air-conditioner is explained in Fig. 2 and Fig. 3. 7 is a blower and sends Atmosphere OA to the adsorption zone 9 of the dehumidification rotor 8. By this, the air is dried, while the temperature rises with heat of adsorption. The dehumidification rotor 8 supports moisture absorption agents, such as silica gel and zeolite, on paper formed in the shape of a honeycomb, and a rotational drive is carried out through a belt (not shown) etc., or by a motor (not shown).

The dehumidification rotor 8 is as shown in a figure 3. The air which passes out of the adsorption zone 9 of the dehumidification rotor 8 passes the rotary sensible-heat exchange element 10. The rotary regenerated (retorted) type sensible-heat exchange element 10 is formed in the shape of a honeycomb from thin sheets, such as aluminum, and a rotational drive is provided through a belt (not shown) etc. by a motor (not shown). The form of such sensible-heat exchange element 10 is shown in Figure 3. Dry air which came out of the adsorption zone 9, has a temperature rise and performs a heat exchange with the rotary type sensible-heat exchange element 10 in the cooling zone 11, and the temperature of dry air falls, while the temperature of the rotary sensible-heat exchange element 10 rises.

The air which is dried and cooled is supplied indoors or to the interior of a room as product air SA. Return air RA from the interior of a room is humidified and cooled by the spray 6. Its humidity rises, and the lower temperature air passes the rotary sensible-heat exchange element 10, and carries out heat exchange with the rotary sensible-heat exchange element 10 in the heating zone 13.

That is, while cooling the rotary sensible-heat exchange element 10, the temperature of the air rises. At a heater 14, temperature rises further, and the heated high-humidity air turns into high temperature air, and goes into the desorption zone 15 of the dehumidification rotor 8. High temperature air carries out the desorption of the moisture with which the dehumidification rotor 8 was adsorbed, and is emitted to the atmosphere by the blower 16 as exhaust gas EA. The heater 14 may be an electric heater, a steam heater, etc., and there may be one or more.

In the above gas turbine co-generation systems, the highest number of rotations is set to about 96,000rpm, and a small gas turbine has the problem of emitted high frequency noise. If a gas turbine is put into a case for prevention of noise, the sound pressure level of this noise is left 1m, falls to about 60 dbs, and is not big as an absolute value.

However, some people feel the noise is very unpleasant since it has a high frequency as mentioned above. Particularly in continuous operation as mentioned above, especially, when surrounding noise, such as at night, decreases, the high noise frequency can become a problem.

Moreover, although waste heat was collected by generating hot water by the boiler as mentioned above, there is no use for plentiful water in summer, and there was a problem that the recovery of waste heat did not show up as a result.

While a gas turbine co-generation system of the present application uses a gas turbine as a source of power, noise tends to make high energy efficiency small. It is difficult to, raise further the thermal efficiency of the above internal combustion engine co-generation systems.

Moreover, the utility value has decreased the value of the hot water in summer depending on use of an internal combustion engine's waste heat for hot-water supply. For this reason, only electric energy can be used actually but there is a problem that thermal efficiency becomes 25% - about 35% after all. Especially the internal combustion engine co-generation system of the 2nd embodiment is excellent in thermal efficiency, and tends to make the use effect of energy high.

Moreover, since the rotational sensible-heat exchange element 10 was used for the above dehumidification air-conditioners as a cooling means for dry air, there is the problem of carrying into the product air SA side a part of air humidified by the spray 12. That is, the rotational sensible-heat exchange element 10 is a honeycomb in the form assembled thin pipes (flutes), and performs heat exchange between the air which passes through the inside of a flute, and the sheet which constitutes the honeycomb. Low-temperature high-humidity air passes through the inside of a flute in the heating zone 13. Low-temperature high-humidity air remains in the flute immediately after moving to the cooling zone 11 from the heating zone 13.

The moisture of this low-temperature high-humidity air mixes in the high temperature dry air which passes through the cooling zone 11, and gives moisture to the high temperature dry air.

For this reason, although the temperature of the air supplied fell, humidity went up and there was a problem that it did not become more comfortable air. In order to make especially temperature of a heater 14 as low as possible and to enhance energy efficiency, energy of the dry air made by the dehumidification rotor 8 to lower humidity absolutely is experienced.

When a moisture mixes in dry air in such a situation, there is a problem that the whole energy efficiency falls. The dehumidification air-conditioner of this invention seek to obviate the above-mentioned problem, and tends to enable it to supply the high air of a comfortable nature at a high efficiency.

Therefore, after passing a honeycomb-like moisture absorption agent, the exhaust gas of a gas turbine is emitted to the atmosphere, in order that the gas turbine co-generation system of the first embodiment of the present application may solve the above disadvantages. In order that the internal combustion engine co-generation system of the second embodiment of the present application might solve the above disadvantages, the inside of the dynamo is connected with the internal combustion engine, and a casing surrounding an internal combustion engine is provided with a means to pass an internal combustion engine's cooling air, mix an internal combustion engine's exhaust gas and cooling air, and made them the hot air for desorption of humidity from the adsorbent. In order to solve the above, the dehumidification air-conditioner of a third embodiment of the present application is equipped with a dehumidification rotor in which desorption is carried out by the heated air, and the heat exchange element which performs heat exchange between two flow paths, and lets the air from the interior of a room pass to a heat exchange element while it supplies to the interior the air dried with the dehumidification rotor through one passage of a heat exchange element.

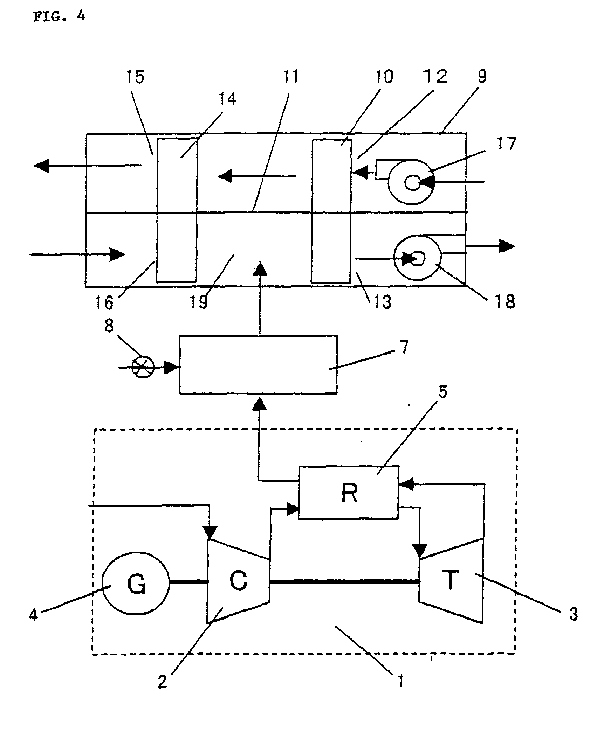

A gas turbine co-generation system is explained in detail in Fig. 4 which is a flow diagram of the gas turbine co-generation system.

A common description of the conventional gas turbine co-generation system shown in the gas turbine co-generation system and Fig. 1 and of the invention of Fig. 4 of the gas turbine unit 1, a compressor 2, a turbine 3, a dynamo 4, and a heat exchanger 5, which overlaps is avoided hereinafter in order to mitigate the redundancy of the explanation.

Mixing chamber 17 mixes outside air and the exhaust gas from the gas turbine unit 1, the valve 18 which is adapted to adjust the amount of outside air introduced. The exit of the mixing chamber 17 is open for free passage to the desiccant air-conditioning unit 19. Details of this free passage lace are disclosed hereinafter.

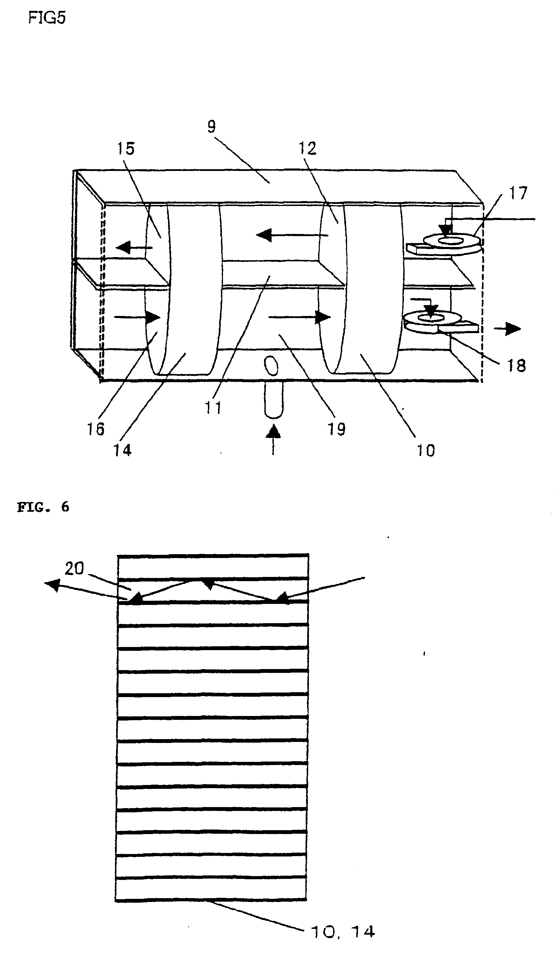

A desiccant air-conditioning unit is explained in Fig. 5 below. Silica gel is absorbed in a paper [ceramic] which is a humidity adsorption rotor 8, for example, was formed in the shape of a honeycomb. The rotational drive for this humidity adsorption rotor 8 is continuously carried out by a motor (not shown).

Moreover, the humidity adsorption rotor 8 is divided into an adsorption zone 9 and a desorption zone 15 by a partition board 20. The rotational sensible-heat exchange element 10 is formed from aluminum foil the shape of a honeycomb, and in the shape of a disk. The rotational drive for this rotational sensible-heat exchange element 10 is continuously carried out by a motor (not shown).

Moreover, the rotational sensible-heat exchange element 10 is divided into the cooling zone 11 and the heating zone 13 by the partition board 20.

Moreover, air which passed through the cooling zone 11 is supplied indoors as the product air of air-conditioning, and the air from the interior of a room passes through the heating zone 13, and is emitted to the outdoors or exterior.

A blower 7 feeds the open air to the adsorption zone 9 side of the desiccant air-conditioning unit 19, and a blower 16 inhales air from the desorption zone 15 of the desiccant air-conditioning unit 19, and it emits it to the atmosphere.

Moreover, the exit of the mixing chamber 17 is open for free passage to the chamber 21 surrounded by the partition board 20 of the desiccant air-conditioning unit 19, the humidity adsorption rotor 8, and the rotorted type sensible-heat exchange element 10.

The gas turbine co-generation system of the first embodiment of a the present application is constituted as mentioned above, and explains the operation below. Operation in summer is explained first. If the gas turbine unit 1 is operated, the atmosphere will be compressed by the compressor 2, and it will be heated by the heat exchanger 5, and will go into a turbine 3.

The fuel mixed here burns and the turbine 3 is rotated. Heat is taken from several hundred degrees C hot exhaust gas, which exhausts from the turbine 3, by the heat exchanger 5, and the temperature falls to about 250 degrees C. Exhaust gas goes into the mixing chamber 17, and is mixed with the outside air, the temperature falls to about 200 degrees C, and then it goes into a chamber 21. From the quantity of the air supplied to the chamber 21 from the mixing chamber 17, if it is set up so that mostly [ the quantity of the air which blower 16 inhales ], the pressure in a chamber 21 becomes a negative pressure, and indoor air will pass through the heating zone 13 of the rotational sensible-heat exchange element 10, and will enter in the chamber 21.

Moreover, the inside of the mixing chamber 17 also becomes a negative pressure for the pressure in a chamber 21 to be a negative pressure. By adjusting the degree of opening of valve 18, the rate of mixture of the outside air mixed by the mixing chamber 17 can be adjusted. The indoor air going into the heating zone 13 of the rotational sensible-heat exchange element 10 is air that is air-conditioned and the indoor air, which is low temperature, passes through the heating zone 13 of the rotational sensible-heat exchange element 10.

That is, indoor low-temperature air cools the rotational sensible-heat exchange element 10, the temperature increases and the air which passed through the heating zone 13 conversely enters chamber 21. The exhaust gas from the gas turbine unit 1 which became about 200 degrees C through the mixing chamber 17 goes into a chamber 21, and it is mixed with the air which passed through the heating zone 13, and reduces to a temperature of about 140 degrees C.

If the humidity adsorption rotor 8 is rotated at 1/3 of a rotation in 1 minute, this air at about 140-degree C will carry out the desorption of the moisture which passes through the desorption zone 15 and by which the humidity adsorption rotor 8 is adsorbed, will turn into high-humidity air, and will be emitted to the outside atmosphere by the blower 16.

The desorption of the humidity carried out in this way, in the desorption zone 15, this portion of the humidity adsorption rotor 8 moves to the adsorption zone 9 on rotation, and performs humidity adsorption of the outside air. By the blower 7, the open air included in the desiccant air-conditioning unit 19 passes through the adsorption zone 9 of the humidity adsorption rotor 8, and is dried. At this time the temperature rises somewhat owing to the heat of adsorption.

The dry air of increased temperature passes through the cooling zone 11 of the rotational sensible-heat exchange element 10, and loses heat to the rotational sensible-heat exchange element 10, and the temperature falls. The dry air of which the temperature fell is supplied to the indoors or interior. Thus, the air dried in the desiccant air-conditioning unit 19 is supplied indoors, and the interior of a room is provided with comfortable air conditions.

The energy consumed in order for the latent heat load of an air conditioner, i.e., an air conditioner unit, to dehumidify, in order that indoor humidity may decrease, can be decreased. For summer when the humidity and temperature are high, this latent heat load may be about 60% among the load energies of an air-conditioner. By mitigating the latent heat load of an air-conditioner, the consumption energy of an air-conditioner can be reduced markedly, and can be made small. Next, during winter rotation of the rotational sensible-heat exchange element 10 ceases, and rotates the humidity adsorption rotor 8 takes place at 20 - 30 times per minute of high-speed number of rotations. Then, the 140-degree C air of the mixing chamber 17 passes through the desorption zone 15, and raises the temperature of the humidity adsorption rotor 8.

At this time, since the number of rotations of the humidity adsorption rotor 8 is high, the desorption of the humidity increases and the temperature for the humidity adsorption rotor 8 is not reduced to desorption temperature. Since the outside air which passed through the adsorption zone 9 has the high temperature of the humidity adsorption rotor 8, the temperature rises.

However, the temperature rises without generating and drying adsorption of humidity, since the desorption of the humidity adsorption rotor 8 is not carried out in the adsorbed humidity in the desorption zone 15. Although the air of which the temperature rose then passes the rotational sensible-heat exchange element 10, since there is no rotation, the rotational sensible-heat exchange element 10 does not produce a heat exchange action.

Therefore, while the temperature has been high, it is supplied indoors, and a heating action is demonstrated. Thus, a desiccant air-conditioning unit provides an air-conditioning action. On the other hand, in order that the exhaust gas from the gas turbine unit 1 may go into a chamber 21 through the mixing chamber 17, the exhaust sound (the loud sound of the gas turbine unit 1) goes into a chamber 21.

The exhaust sound passes the rotational sensible-heat exchange element 10, and enters indoors, and is emitted to the exterior through the humidity adsorption rotor 8. The rotational sensible-heat exchange element 10 and the humidity adsorption rotor 8 are honeycomb-like, and in section as shown in Fig. 6, provide a small free passage. It is in the state where many holes 22 were formed therefore, the exhaust sound of the loud sound of the gas turbine unit 1 is shown in Fig. 6 as a free passage it comes out to the exterior, colliding with the surface of a wall of a hole 22. Attenuation is repeated to the degree of a collision, and finally it is reduced to a small sound, and comes out to the exterior.

Moreover, since the wave of loud sound prefers to go in a straight line, this effect is strongly reduced. Furthermore, the energy which the sound wave of high frequency has is consumed by the desorption of the humidity with which the rotational sensible-heat exchange element 10 was adsorbed. Therefore, in the noise of an unpleasant loud sound, the rate of attenuation becomes high.

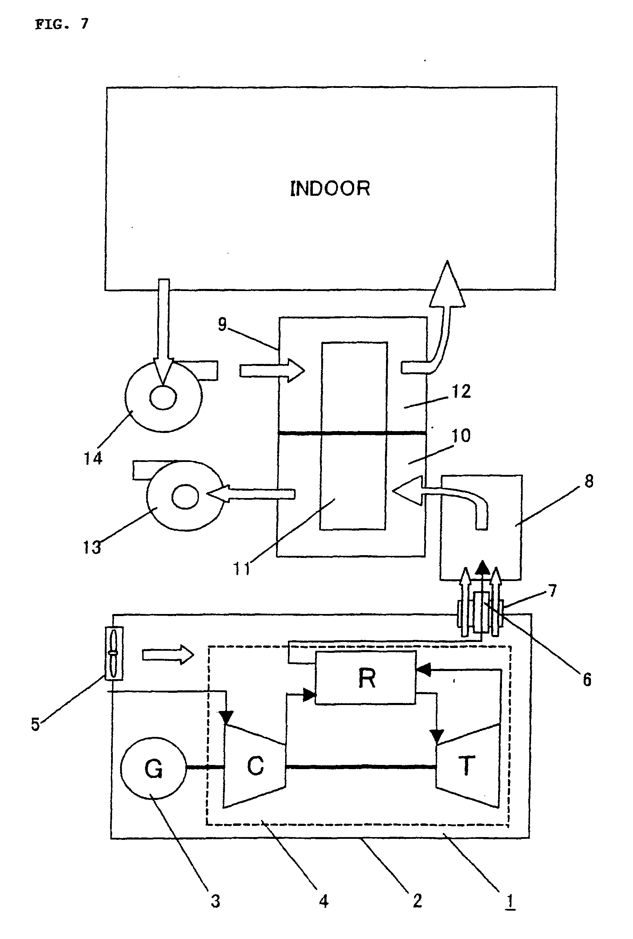

Next, an embodiment of the internal combustion engine co-generation system is explained in detail in Fig. 7.

The power generation part 23 consists of the casing 24 surrounding the whole, a dynamo 4, a gas turbine 3, a cooling blower 25, etc. A dynamo 4 is connected with a gas turbine 3, and generates electricity by rotation of a gas turbine 3. The gas turbine unit 1 consists of a compressor 2, a turbine 3, and a heat exchanger 5, and the air compressed by the compressor 2 is heated by the heat exchanger 5, and it passes into the turbine 3.

Fuel is mixed with high-pressure and hot air, it burns at the entrance of the turbine 3, and driving force is applied to the turbine 3. The hot exhaust gas which exits the turbine 3 gives up heat to the air which exits the compressor 2, via the heat exchanger 5, and is discharged from the exhaust gas outlet 26. The temperature of the exhaust gas at this time is about 280 degrees C.

Moreover, the outside or exterior air is taken in by the cooling blower 25 in casing 24, and a gas turbine 3 and dynamo 4 are cooled by the open air. About a 30° C temperature rise is given to the outside air temperature, and the air which cooled the gas turbine 3 and the dynamo 4 is discharged from the cooling air outlet 27. Since the temperature of an exhaust gas is about 280 degrees C, a high temperature, the temperature of the exhaust gas outlet 26 also rises at 200 degrees C or more.

Then, the surroundings of the exhaust gas outlet 26 are surrounded by the cooling air outlet 27 for safety. That is, the exhaust gas outlet 26 and the cooling air outlet 27 are formed on the same axis. The mixing chamber 28 mixes the air from the exhaust gas and the cooling air outlet 27 from the exhaust gas outlet 26. The exit of this mixing chamber 28 is connected to the reactivation zone 15 of the dehumidification part 29. Honeycomb-like dehumidification rotor 8 where humidity adsorbent, such as silica gel, is supported is established in the dehumidification part 29. The dehumidification part 29 is divided into the adsorption zone 9 and the reactivation zone 15.

Moreover, the rotational drive of the dehumidification rotor 8 is carried out by a motor (not shown). The suction side is connected with the reactivation zone 15 so that a blower 16 may suck out the air of the reactivation zone 15 of the dehumidification part 29.

A blower 7 inhales indoor air and sends it to the adsorption zone 9 of the dehumidification part 29. This first embodiment of an internal combustion engine co-generation system is constructed as above and its operation is explained below. Fuel is first sent to the gas turbine 3, and the gas turbine 3 is started.

A dynamo 4 starts power generation owing to this action. The dynamo 4 generates about 28% of electric power of the energy which fuel burned and generated. Heat exchange is carried out with the air which came out of the compressor 2 by the heat exchanger 5, the temperature falls to about 280 degrees C, and the hot air which came out of the turbine 3 comes from the exhaust gas outlet 26 out of the power generation part 23.

The exhaust gas which comes out from this exhaust gas outlet 26 outside has about 57% of energy of the energy which fuel burned and generated. Moreover, the outside air is sent by the cooling blower 25 in casing 24, and a gas turbine 3 and a dynamo 4 are cooled.

That is, the outside air takes the heat of a gas turbine 3 or a dynamo 4, and the temperature rises by about 30 degrees C, and is discharged from the cooling air outlet 27. The air discharged from the cooling air outlet 27 at this time has about 10% of energy of the energy which fuel burned and generated. It is mixed within the mixing chamber 28, and the exhaust gas which comes out from the exhaust gas outlet 26 outside, and the air discharged from the cooling air outlet 27 becomes about 140° C temperature air, and goes into the reactivation zone 15 of the dehumidification part 29 by the blower 16.

With this about 140°C air, the portion to which the desorption of the dehumidification rotor 8 was carried out in the humidity to which it stuck, and the desorption of the dehumidification rotor 8 was carried out moves to the adsorption zone 9, and dehumidifies indoor air. That is, energy 10% which energy 57% which an exhaust gas has among the energies which did not contribute to power generation, and cooling air is used for the desorption of the dehumidification rotor 8.

The energy will be used for indoor dehumidification of say a hospital which installed the gas turbine co-generation system, or a place of business, etc. by this. When weather conditions are high temperature and 60% or higher humidity, for example, temperature [ of 32 degrees C ] relative humidity, and it air-conditions to 60% of room temperature [ of 25 degrees C ] relative humidity, about 60% of the consumption energy of a freezer is consumed by latent heat load.

That is, although indoor air is dehumidified when the moisture in indoor air forms dew on the evaporator of an air conditioner when air conditioning, when water dews, latent heat load occurs. Therefore, if indoor air is dehumidified by the dehumidification part 29, the load of an air conditioner will turn into only sensible-heat load, and the consumption energy of an air conditioner will become below a half.

That is, while 72% of energy which did not contribute to power generation, 67% is used for dehumidification and decreases the load of an air conditioner. Since remaining heat without utility value can be especially effectively used for summer, the energy-saving effect is substantially high.

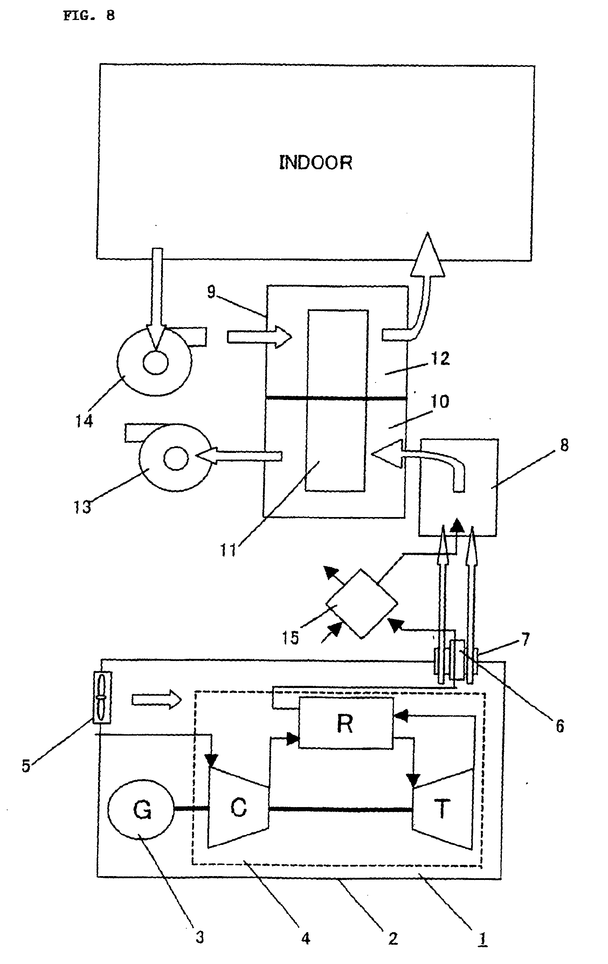

A gas turbine using natural gas or liquefied petroleum gas has few toxic substances contained in its exhaust gas, such as hydrocarbons and carbon monoxide, and can use the exhaust gas for a reactivation of the direct dehumidification rotor 8 satisfactorily. However, when indoor air is required to be exceptionally pure, the second embodiment can be used. Fig. 8 is a flow diagram of the second embodiment, elements common to the embodiment of Fig. 7, such as the power generation part 23, casing 24, the dynamo 4, the gas turbine 3, the cooling blower 25, the exhaust gas outlet 26, the cooling air outlet 27, the mixing chamber 28, the dehumidification part 29, the reactivation zone 15, dehumidification Rotor 8, the adsorption zone 9, and blowers 7 and 16, and are not described in detail again in order to avoid redundancy.

The second embodiment has a heat exchanger 30 which performs heat exchange with the exhaust gas and the atmosphere which came out of the exhaust gas outlet 26. The air which became the high temperature air which passed the heat exchanger 30 is lead to the mixing chamber 28.

A parallel opposite flow type heat exchanger is mutually suitable for the intersected [perpendicular] type heat exchanger with two air passages, where two air passages, which are mutually independent and have thermal conductivity as a heat exchanger 30, mutually intersect perpendicularly. Generally the heat exchange efficiency of such a heat exchanger is 60 - 70%, and energy 10% of which energy 57% - 70% say 60% and cooling air which provide an exhaust gas may be used for dehumidification.

It was made to return indoors. The air which came out of the dehumidification part 29 is returned to the interior as it is in the above embodiments. In case air passes the dehumidification rotor 8, in order that the dehumidification rotor 8 may be adsorbed and the humidity in the air may emit adsorption heat, the temperature of the dry air which is supplied from the dehumidification part 29.

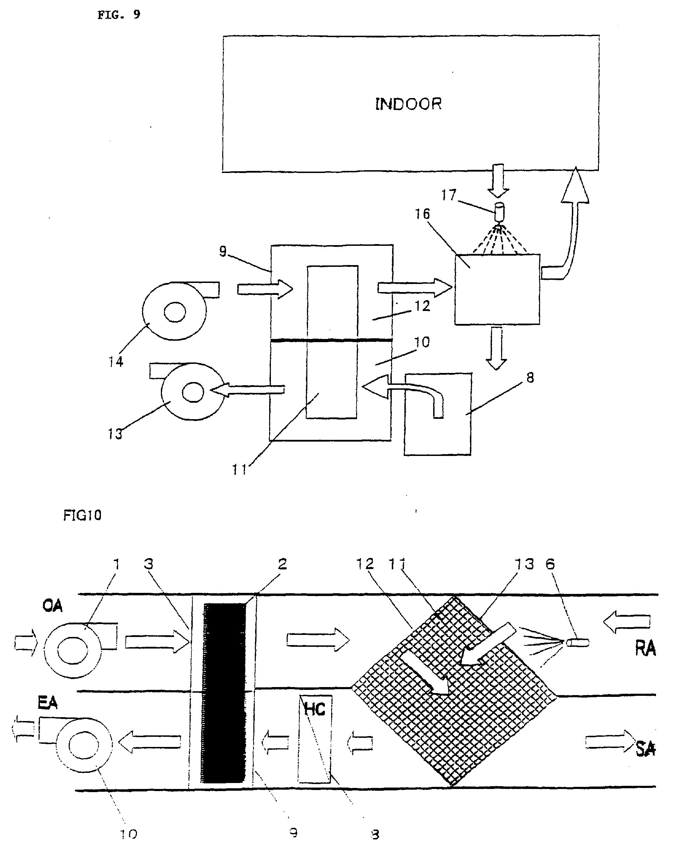

A third embodiment which cools the dry air supplied from the dehumidification part 29, and is supplied indoors, is explained hereinafter. Fig. 9 expresses only the principal part of the third embodiment.

A third the embodiment has in common with the first embodiment 1, the power generation part 23, casing 24, a dynamo 4, a gas turbine 3, the cooling blower 25, the exhaust gas outlet 26, the cooling air outlet 27, the mixing chamber 28, the dehumidification part 29, the reactivation zone 15, dehumidification Rotor 8, the adsorption zone 9, and blowers 7 and 16.

The third embodiment also has in common a heat exchanger 30, omits illustration of the power generation part 23, casing 24, a dynamo 4, a gas turbine 3, the cooling blower 25, the exhaust gas outlet 26, the cooling air outlet 27, and a heat exchanger 30, and abbreviates the overlapping description in order to avoid redundancy with the second embodiment of Fig. 8. As for the embodiment 3 of Fig. 9, as for the embodiments of Fig. 7 and Fig. 8, the blower's 7 suction side has opened the blower's 7 suction side wide to the atmosphere from indoors for free open passage.

Figure 9, in one passage of the intersected [ perpendicularly ] type sensible-heat exchange element 31, the air from the interior of a room is allowed to pass, and the air from the adsorption zone 9 of the dehumidification part 29 is allowed to pass in the passage of through and another side. Moreover, the exit of one passage is wide opened to the atmosphere, and the exit of the passage of the other side is open for free passage with the interior of a room.

The water spray 12 sprays water on the air included in one passage of the intersected [ perpendicularly ] type sensible-heat exchange element 31 from the interior of a room. The air included in one passage of the intersected [ perpendicularly ] type sensible-heat exchange element 31 from the interior of a room has water sprayed by the water spray 12, and temperature falls by the evaporation heat of water.

Already, although the temperature is rising as explained, when passing the intersected [ perpendicularly ] type sensible-heat exchange element 31, heat exchange is considered as the air from the interior of a room to which temperature fell, it is cooled, and the dry air from the adsorption zone 9 of the dehumidification part 29 turns into low-temperature dry air, and is supplied indoors. In this third embodiment, indoor air is emitted to the atmosphere from one passage of the intersected [ perpendicularly ] type sensible-heat exchange element 31, and the atmosphere is supplied indoors through the passage of another side of a blower 7, the adsorption zone 9, and the intersected [ perpendicularly ] type sensible-heat exchange element 31.

That is, fresh air is always supplied indoors. Although the above embodiments show an example which uses a gas turbine as an internal combustion engine, even if it uses a reciprocating engine which uses natural gas, a liquefied petroleum gas, etc. as fuel, the same effect is achieved.

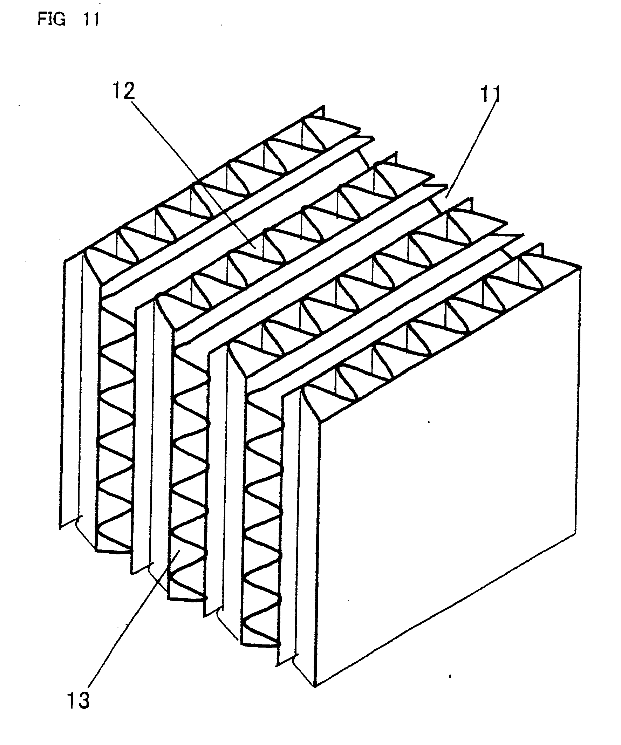

Hereafter, a modification of the dehumidification air-conditioner of the third embodiment of a the present application is explained in detail Fig. 10 and Fig. 11. Reference to a blower 7, the dehumidification rotor 8, the adsorption zone 9, a spray 12, a heater 14, the desorption zone 15, and the drawing 2 showing the conventional dehumidification air-conditioner about a blower 16, not made in detail in order to avoid redundancy is omitted.

The intersected [ perpendicularly ] type sensible-heat exchange element 31 is piled up in the sheet wave-liked on a plane sheet, as shown in a Fig. 11, and laminating is carried out and it is made so that the directions of adjacent waves may be offset by 90°. The intersected [ perpendicularly ] type sensible-heat exchange element 31 has the 1st passage 32 and the second passage 33 which intersect perpendicularly mutually, and sensible-heat exchange is performed by this between each passage. Moreover, the gas which passes through the two passages is not mixed, respectively.

The air which the first passage 32 of the intersected [ perpendicularly ] type sensible-heat exchange element 31 was open for free passage with the adsorption zone 9 of the dehumidification rotor 8, and came out from the first passage 32 of the intersected [ perpendicularly type sensible-heat exchange element 31 turns into product air SA.

A spray 12 is formed so that water may be sprayed on the second passage 33 of the intersected [ perpendicularly ] type sensible-heat exchange element 31, and the exit of the second passage 33 of the intersected [ perpendicularly ] type sensible-heat exchange element 31 is opening it for free passage at the heater 14. The exit of a heater 14 is open for free passage with the desorption zone 15 of the dehumidification rotor 8, and the exit of the desorption zone 15 is open for free passage with the suction mouth of a blower 16.

The embodiment 1 of this invention is constituted as described above, and the operation is explained below. A blower 7 and a blower 16 are operated first, and water is supplied to a spray 12. Moreover, while rotating the dehumidification rotor 8, it energizes at a heater 14, or steam is sent and a heater 14 is changed into an exothermic state. While the outside air OA is sent to the adsorption zone 9 of the dehumidification rotor 8 by the blower 7 and turns into dry air by it, the temperature rises with adsorption heat.

The dry air to which this temperature rose passes through the first passage 32 of the intersected [ perpendicularly ] type sensible-heat exchange element 31. The dry air which came out of the 1st passage 32 of the intersected [ perpendicularly ] type sensible-heat exchange element 31 carries out heat exchange with the air which passes through the second passage 33, and the temperature falls. It is supplied indoors by making into product air SA the dry air in which this temperature fell. Indoor air RA is attracted by the blower 16 and passes through the place in which the spray 12 is installed first. Since indoor air is generally about 60 - 70% of relative humidity, the water supplied by the spray 12 is evaporated and air RA is cooled.

The air RA cooled by the spray 12 passes through the 2nd passage 33 of the intersected [ perpendicularly ] type sensible-heat exchange element 31. The amount of spraying of the water by the spray 12 is carried out to more than the amount of evaporation by spraying. Waterdrop enters in the second passage 33 with air by action.

The waterdrops with a smaller diameter float in air as a mist, and enters in the second passage 33, and the waterdrops with a big diameter falls in the second passage 33. The waterdrops with the smaller diameter which float in the air will be evaporated if the temperature in the second passage 33 rises by heat exchange.

Moreover, the larger waterdrops which fell in the second passage 33 wet the inner wall of the second passage 33, and form a thin layer of water. The thin layer of this water is evaporated with the rise of the temperature of the inner wall of the second passage 33 by heat exchange. Thus, by the evaporation heat of water, the temperature in the second passage 33 of the intersected [ perpendicularly type sensible-heat exchange element 31 falls.

Since heat exchange is performed between the second passage 33 and the first passage 32, the temperature of the first passage 32 falls. The air which passed through the second passage 33 of the intersected [ perpendicularly ] type sensible-heat exchange element 31 goes into a heater 14.

A heater 14 is a radiator or an electric heater or a gas burner and steam which burn inflammable gas, such as natural gas and liquefied petroleum gas, and warm water passes the heater. As long as the heater 14 is a heating means, it may be a means like the mixed gas of the high temperature exhaust gas from other combustion apparatus or high temperature exhaust gas, and air. The air heated at the heater 14 passes along the desorption zone 15 of the dehumidification rotor 8, carries out the desorption of the moisture by which the moisture absorption agent of the dehumidification rotor 8 was adsorbed, and is emitted to the atmosphere by the blower 16 as exhaust gas EA.

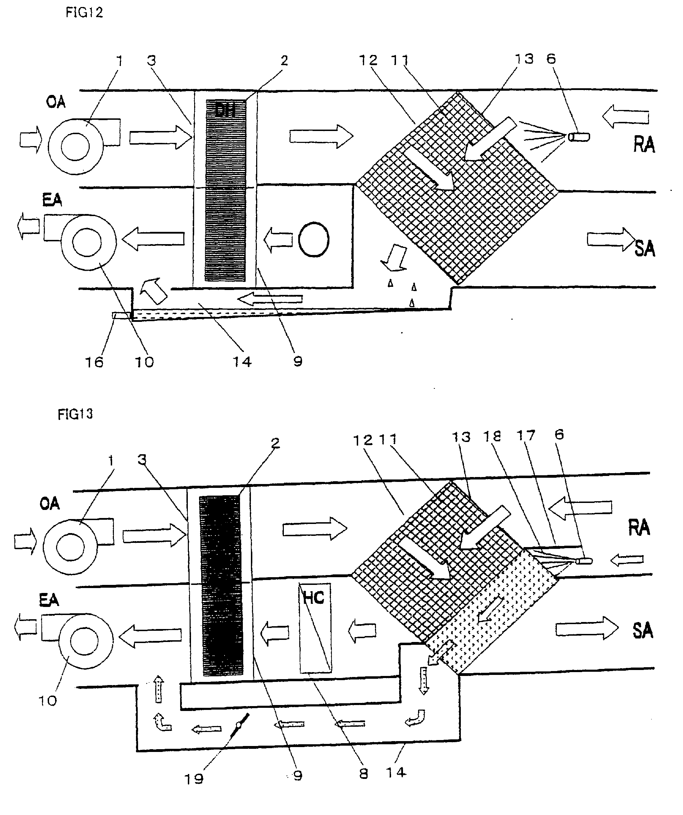

Thus, it becomes the style [ the open air OA ] has dryness and is cold, and is supplied indoors, and the return air RA from the interior of a room turns into heat-and-high-humidity air, and is emitted to the atmosphere. The second embodiment of the dehumidification air-conditioner of this invention is explained in detail in Fig. 12 below.

A description of a blower 7, the dehumidification rotor 8, the adsorption zone 9, a spray 12, the desorption zone 15, a blower 16, the intersected [ perpendicularly ] type sensible-heat exchange element 31, the 1st passage 32, and the second passage 33, which is substantially the same as that of first embodiment, is omitted.

The exhaust passage 34 of this embodiment from second passage 33 at the exit of the intersected [ perpendicularly ] type sensible-heat exchange element 31 exits to [ in the passage ] the suction mouth of a blower 16.

Moreover, the high temperature exhaust gas free passage mouth 35 which puts exhaust gas, such as a gas turbine dynamo, into the domain which is open for free passage in the desorption zone 15 is formed. Furthermore, the inclination is attached and, as for the bottom of the exhaust passage 34, a drain pipe 36 is formed in the lowest portion.

The dehumidification air-conditioner of the 2nd embodiment of this invention is constituted as mentioned above, and explains the operation below. It energizes to a blower 7 and a blower 16 first, and water is supplied to a spray 12.

Moreover, during rotation of the dehumidification rotor 8, the hot exhaust gas produced from a gas turbine dynamo etc. as shown in the high temperature exhaust gas free passage mouth 35 in Fig. 4 is put in. While the outside air OA is sent to the adsorption zone 9 of the dehumidification rotor 8 by the blower 7 and turns into dry air by it, temperature rises with adsorption heat.

The dry air to which this temperature rose passes through the first passage 32 of the intersected [ perpendicularly ] type sensible-heat exchange element 31. The dry air which came out of the first passage 32 of the intersected [ perpendicularly ] type sensible-heat exchange element 31 carries out heat exchange with the air which passes through the 2nd passage 33, and the temperature falls. It supplies the interior by making into supply air SA the dry air in which this temperature fell. Indoor air RA is sucked out by the blower 16 and passes through the place in which the spray 12 is installed first. Since indoor air is generally about 60 - 70% of relative humidity, by the spray 12, water is evaporated and air RA is cooled.

The air cooled by the spray 12 passes through the second passage 33 of the intersected [ perpendicularly ] type sensible-heat exchange element 31. The amount of spraying of the water by the spray 12 is carried out to more than the amount of evaporation by spraying. Waterdrops enters in the second passage 33 with air by this.

The waterdrops with a smaller diameter float in air as a mist, and enters the second passage 33, and the waterdrops with a larger diameter adheres to the wall in the second passage 33. The waterdrops with the smaller diameter which float in air will be evaporated if the temperature in the second passage 33 rises by heat exchange. Moreover, the larger waterdrops adhering to the wall in the second passage 33 wet the inner wall of the secondpassage 33, and form a thin layer of water. This thin layer of water is evaporated with the rise of the temperature of the inner wall of the second passage 33 by heat exchange.

By the evaporation heat of this water, the temperature in the second passage 33 of the intersected [ perpendicularly ] type sensible-heat exchange element 31 falls. Since heat exchange is performed between the second passage 33 and the first passage 32, the temperature of the first passage 32 falls. The air which passed through the 2nd passage 33 of the intersected [ perpendicularly ] type sensible-heat exchange element 31 is emitted to the atmosphere by the blower 16 through the exhaust passage 34.

Hot exhaust gas goes into the high temperature exhaust gas free passage mouth 35, and carries out the desorption of the humidity with which it passed through the desorption zone 15 and the dehumidification rotor 8 was adsorbed. And the air which passed through the desorption zone 15 turns into high-humidity air, with the air RA from the exhaust passage 34, turns into exhaust gas EA and is emitted to the atmosphere by the blower 16.

The waterdrops dropped from the intersected [ perpendicularly ] type sensible-heat exchange element 31 collect on the bottom of the exhaust passage 34. Since the bottom of this exhaust passage 34 inclines, the dropped water moves to the lower one and is drawn from the drain pipe 36 outside. A third embodiment of the dehumidification air-conditioner of this invention is explained in detail in Fig. 13.

There is a blower 7, a dehumidification rotor 8, a adsorption zone 9, a spray 12, a desorption zone 15, a blower 16, are intersected [ perpendicularly ] type sensible-heat exchange element 31, a first passage 32, and a second passage 33 , all of which are the same as that of the first embodiment. As for the exhaust passage 34, the explanation which is the same as that of the second above-mentioned embodiment, is omitted. In Fig. 13, a partition board 37 is dividing a part of the second passage 33 entrance of the intersected [ perpendicularly ] type sensible-heat exchange element 31.

A spray 12 is formed in the the mouth of the divided second passage 33, and the cooling passage 38 is thus formed. The amount of spraying by this spray 12 is arranged to be in such a state that the particles of water float in the air, whose relative humidity is 100%. The exhaust passage 34 leads [ from the exit of the cooling passage 38 ] to a blower's 16 suction side.

A valve 39 which adjusts the quantity of the air which passes the exhaust passage 34 byopening and closing is mounted in the middle of the exhaust passage 34. The dehumidification air-conditioner of the third embodiment is constituted as mentioned above, and the operation is hereinafter explained.

The blower 7 and the blower 16 are started, next the heaters 14, such as a gas burner, are lit, and water is emitted from the spray 12. Then, the open air OA is sucked in by the blower 7, goes into the blower 7, is pushed out by the blower 7, and goes into the adsorption zone 9 of the dehumidification rotor 8. Here, while the dehumidification rotor 8 is adsorbed and the humidity in the open air turns into dry air, the temperature rises with adsorption heat.

The dry air with a temperature rise goes into the first passage 32 of the intersected [ perpendicularly ] type sensible-heat exchange element 31. Here, dry air gives up the sensible heat to the intersected [ perpendicularly ] type sensible-heat exchange element 31, and temperature falls. That is, temperature falls, and the dry air which came out of the first passage 32 of the intersected [ perpendicularly ] type sensible-heat exchange element 31 turns into comfortable supply air SA, and is supplied indoors by the evaporation heat of the water sprayed by the spray 12.

Indoor air RA goes into the second passage 33 of the intersected [ perpendicularly ] type sensible-heat exchange element 31 by suction of the blower 16. Since the inside of the exhaust passage 34 is also a negative pressure at this time, indoor air RA goes also into the cooling passage 38. While the air in the cooling passage 38 is humidified by the spray 12 and temperature falls, the particle of water is floating.

Moreover, the inside of the cooling passage 38 is in a state wetted with water. While passing through the cooling passage 38, the water which wet the cooling passage 38 inside is evaporated by the air which passes through the first passage 32 of the intersected [ perpendicularly ] type sensible-heat exchange element 31, takes evaporation heat, and goes into the exhaust passage 34.

Since only sensible-heat exchange is performed between the first passage 32 of the intersected [ perpendicularly ] type sensible-heat exchange element 31, and the second passage 33 and there is no mixture of both gas, naturally the air in the first passage 32 and the air in the cooling passage 38 are not mixed. Therefore, the air which passes through the first passage 32 of the intersected [ perpendicularly ] type sensible-heat exchange element 31 is cooled, without being humidified.

Heat exchange is carried out with the dry air to which temperature rose with the adsorption heat of the dehumidification rotor 8, temperature rises, at a heater 14, temperature rises further and the air included in the second passage 33 of the intersected [ perpendicularly ] type sensible-heat exchange element 31 turns into high temperature air.

This high temperature air passes through the desorption zone 15 of the dehumidification rotor 8, and carries out the desorption of the moisture which the dehumidification rotor 8 has. The heat-and-high-humidity air which came out of the desorption zone 15 of the dehumidification rotor 8 passes a blower 16, turns into exhaust gas EA, and is emitted to the atmosphere.

Moreover, with the heat-and-high-humidity air which came out of the desorption zone 15 of the dehumidification rotor 8, the air which passed through the exhaust passage 34 also turns into exhaust gas EA, and is emitted to the atmosphere by the blower 16. And by adjusting a valve 39, the quantity of the air which flows in the exhaust passage 34 can be adjusted, and the temperature of supply air SA can be controlled by this regulation and regulation of the amount of spraying from a spray 12.

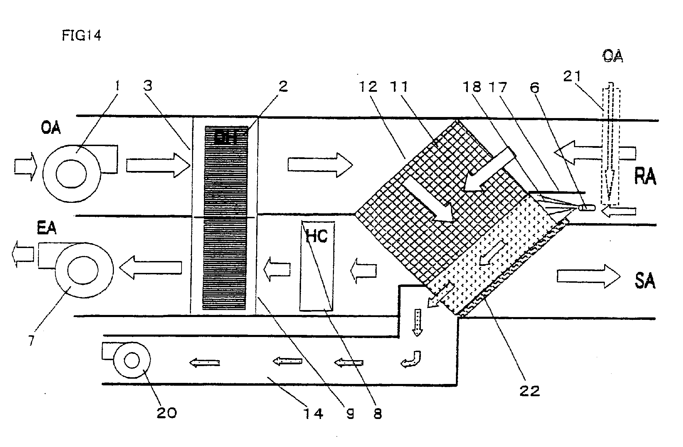

Fig. 14 is a sectional view showing a fourth embodiment. As compared with the third embodiment, the embodiment Fig. 14 is similar to Fig. 13, the point at which the blower 40 of the exclusive use which sucks out the air in the exhaust passage 34 is formed, and the point at which the outside air introduction pipe 41 is formed, being different.

Moreover, the point at which the humidification element 42 is attached in first passage 32 exit of the intersected [ perpendicularly ] type sensible-heat exchange element 31, and the point at which the valve 39 is omitted, are therefore different. That is, the quantity of the air which flows in the exhaust passage 34 can be performed by controlling a blower 40 by forming the blower 40 of exclusive use of the exhaust passage 34.

Moreover, Fig. 14 shows an outside air introduction pipe 41 which introduces direct outside air OA into the cooling passage 38 divided in a part of the second passage with the partition board 37.

When there is less quantity of the return air RA from the interior of a room than the quantity of the air SA which a ventilation fan etc. is indoors installed (not shown) and is supplied to the interior of a room, it is better than the open air introduction pipe 41 to supply the direct open air OA to the cooling passage 38. Or when the generation source of a lot of humidity is indoors, the humidity of the return air RA from the interior of a room is higher than the open air, and when the direct open air OA is supplied to the cooling passage 38 from the open air introduction pipe 41 also in such a case, the cooling effect in the cooling passage 38 is high.

Furthermore, in Fig. 14, its water retention capability is high while the humidification element 42 has breathability, such as a nonwoven fabric. The tip of the humidification element 42 is projects into the cooling passage 38, and water is supplied with the spraying water from a spray 12.

Humidification cooling of the air which comes from the first passage 32 of the intersected [ perpendicularly ] type sensible-heat exchange element 31 is carried out by this, and the temperature thus falls further. That is, although the humidity goes up for the supply air SA somewhat, the temperature falls further. This embodiment is suitable when [ that the humidity of the open air is low and ] temperature is high. Although this embodiment has a nonwoven fabric as a humidification element 42, formed in the shape of a honeycomb in addition to this when it had hydrophilicity and breathability, felt with a coarse weave, like in a big sponge can be used. In each of the above embodiments, although the intersected [ perpendicularly ] type sensible-heat exchange element 31 was used as a static type heat exchange element, the heat exchange element which used the opposite style type heat exchange element and the heat pipe in addition to this can be used.

Since the gas turbine co-generation system of the first invention of a the present application is constructed as above, the exhaust sound of the unpleasant loud sound of the gas turbine unit can be decreased sharply.

Furthermore, since the attenuation means of the exhaust sound is a humidity adsorption rotor, it not only attenuates exhaust sound, but the gas turbine co-generation system of this invention can be dehumidified by the remaining heat which exhaust gas has. In summer, a power consumption peak is large.

Generally this is because it is humid and of a high temperature and the electric power consumed by an air conditioner are large in summer. Therefore, the big power supply equipment as a social infrastructure is required. However, by making it work at the high time of power consumption in summer, as for the gas turbine co-generation system, it is possible to make it decrease to the power consumption of an air conditioner, and it not only generates it, but it can lower the power consumption peak of summer from both sides of power generation and energy saving. Thus, since the embodiments of the invention can use remaining heat effectively for the high summer electricity demand, its plant-and-equipment investment effect is high.

Moreover, since the exhaust gas of a gas turbine is made to pass to the space in honeycomb-like heat exchange rotor and humidity adsorption rotor, the invention can heighten the silence effect further. Since the internal combustion engine co-generation system of the second embodiment of a the present application is similarly constituted, it can use the waste heat of the cooling air which cooled not only waste heat but the internal combustion engine which an exhaust gas has among the waste heat which an internal combustion engine emits, and very high thermal efficiency can be expected.

Furthermore, as a use place of an internal combustion engine's waste heat, since the internal combustion engine co-generation system is made into the adsorbent desorption heat of the dehumidification part of an adsorption formula, it can mitigate the load of an air conditioner at the time when waste heat can be abundantly taken, like summer especially. Power consumption can concentrate on summer, this can make small the large electric power supply infrastructure for this reason, and the environmental contribution to society is high.

Moreover, the invention can cool and supply the dry air supplied by the dehumidification part. Therefore, the function as an air conditioner is expectable, and electric energy is consumed by the blower and can almost make the interior of a room comfortable air conditions only by an internal combustion engine's waste heat. Since it is made to lower the temperature of the air supplied by sensible-heat exchange, the humidity of supply air cannot go up and the dehumidification air-conditioner of the third embodiment can supply the high air of comfortable nature.

In the case of the embodiment in which the indoor air which passed the static type heat exchanger like the embodiment shown in Figs. 12 - 14, or its part does not pass a dehumidification rotor, it is satisfactory even if indoor air is polluted. That is, even if indoor air is polluted with contaminants, such as smoke of a cigarette, indoor air cannot contact a dehumidification rotor but can prevent contamination of a dehumidification rotor.

Moreover, an indoor contaminant does not mix in supply air.

Moreover too, the static type sensible-heat exchange element is performing both exhaust heat recovery (cooling of the supply air by indoor cold), and indirect evaporation cooling, and the whole equipment can be realized at a compact and low cost. Since the static type sensible-heat exchange element is used especially as a heat exchanger, there is no carrying in of humidity between the gas which performs heat exchange, and the humidity of supply air can be maintained low.

When the humidity of the open air is low, humidification cooling can also be added and temperature of supply air can be further made low in this case. Furthermore, the cooling effect will become high if the generation source of humidity is indoors, and it lets the open air pass from the open air to the 2nd passage of a heat exchange element when the direction of indoor air is humid.

### [Description of Numerals]

1 gas-turbine unit
2 compressors
3 turbines
4 dynamos
5 heat exchangers
7, 16 blowers
8 dehumidification rotor
9 adsorption zone
10 rotortion type sensible-heat exchange element
11 cooling zone
12 water spray
13 heating zone
14 heaters
15 desorption zone
16 blower
17 mixing chamber
18 valves
19 desiccant air-conditioning unit
20 partition board
23 power generation parts
24 casing
25 cooling blower
26 exhaust-gas outlet
27 cooling air outlet
28 mixing chamber
29 dehumidification parts
31 rectangular-cross type sensible-heat exchange element
32 1st passage
33 2nd passage
34 exhaust passages
35 high-temperature exhaust gas free passage mouth
36 drain pipes
37 partition board
38 cooling passages
39 valves

## Claims

1. An internal combustion engine co-generation system comprising:
an internal combustion engine (1);
a dynamo (4) connected with said internal combustion engine;
a casing (24) surrounding said internal combustion engine, the casing arranged to have cooling air passed therethrough;
a power generating part (23), including the dynamo and internal combustion engine, the power generating part being inside said casing;
a dehumidifying part (29) which is arranged to dry air by a humidity adsorbent, wherein the humidity adsorbent is arranged to desorb water therein by a hot air flow; and
the system being **characterised by** further comprising mixing means (28) for mixing cooling air heated as it passes through said casing with the exhaust gas of said internal combustion engine and for providing the mixed hot air flow for the desorption of said dehumidifying part.

2. An internal combustion engine co-generation system comprising:
an internal combustion engine (1);
a dynamo (4) connected with said internal combustion engine;
a casing (24) surrounding said internal combustion engine, the casing arranged to have cooling air passed therethrough;
a power generating part (23), including the dynamo and internal combustion engine, the power generating part being inside said casing;
a dehumidifying part (29) which is arranged to dry air by a humidity adsorbent, wherein said humidity adsorbent is arranged to desorb water therein by a hot air flow; and
the system being **characterised by** further comprising mixing means (28) for mixing air heated by heat exchange with exhaust gas of said internal combustion engine with cooling air heated by passing through said casing and for providing the mixed hot air flow for the desorption of said dehumidifying part.

3. A system according to claim 1 or 2, **characterised by** the dehumidifying part (29) comprising a honeycomb rotor (8) carrying a humidity adsorbent.

4. A system according to any of claims 1 to 3, **characterised by** being arranged to allow dry air supplied from the dehumidifying part (29) to be cooled and supplied in a room.

5. A system according to Claim 1, comprising:
a dehumidifying and air-conditioning apparatus, said apparatus comprising a dehumidifier rotor (8) capable of desorbing the adsorbed humidity by a heated air, and a heat exchanger element (31) for effecting heat exchange between first and second passages (32, 33), the first passage of said heat exchanger arranged to pass the air dried by said dehumidifier to supply said air in a room, arranged to pass through from the room to the second passage of said heat exchanger, the second passage of said heat exchanger element arranged to have water supplied thereto, wherein the dehumidifier rotor (8) is arranged to be used in the dehumidifying part (29).

## Patentansprüche

1. Kraft-Wärme-Kopplung-System für einen Verbrennungsmotor, umfassend:
Einen Verbrennungsmotor (1);
Einen Dynamo (4), der mit dem Verbrennungsmotor verbunden ist,
ein Gehäuse (24), das den Verbrennungsmotor umgibt, wobei das Gehäuse derart angeordnet ist, dass Kühlluft durch dieses hindurchtritt;
ein Energieerzeugungsmittel (23), das den Dynamo und den Verbrennungsmotor einschließt, wobei das Energieerzeugungsmittel innerhalb des Gehäuses ist;
ein Entfeuchtungsmittel (29), das angeordnet ist, um Luft durch einen Feuchtigkeitsabsorber zu trocknen, wobei der Feuchtigkeitsabsorber angeordnet ist, um Wasser durch einen Heißluftstrom darin zu desorbieren; und
das System **gekennzeichnet ist durch** ferner umfassend ein Mischmittel (28) zum Mischen von Kühlluft, die während diese **durch** das Gehäuse hindurchtritt mit dem Abgas des Verbrennungsmotors erhitzt wird, und zum Bereitstellen des gemischten Heißluftstroms zur Desorption des Entfeuchtungsmittels.

2. Kraft-Wärme-Kopplung-System für einen Verbrennungsmotor, umfassend:
Einen Verbrennungsmotor (1);
Einen Dynamo (4), der mit dem Verbrennungsmotor verbunden ist,
ein Gehäuse (24), das den Verbrennungsmotor umgibt, wobei das Gehäuse derart angeordnet ist, dass Kühlluft durch dieses hindurchtritt;
ein Energieerzeugungsmittel (23), der den Dynamo und den Verbrennungsmotor einschließt, wobei das Energieerzeugungsmittel innerhalb des Gehäuses ist;
ein Entfeuchtungsmittel (29), das angeordnet ist, um Luft durch einen Feuchtigkeitsabsorber zu trocknen, wobei der Feuchtigkeitsabsorber angeordnet ist, um Wasser durch einen Heißluftstrom darin zu desorbieren; und
das System **gekennzeichnet ist durch** ferner umfassend ein Mischmittel (28) zum Mischen von Luft, die **durch** den Wärmeaustausch mit dem Abgas des Verbrennungsmotors erhitzt wird, mit der Kühlluft, die **durch** das Hindurchtreten **durch** das Gehäuse erhitzt wird, und zum Bereitstellen des gemischten Heißluftstroms zur Desorption des Entfeuchtungsmittels.

3. System gemäß Anspruch 1 oder 2, **gekennzeichnet dadurch, dass** das Entfeuchtungsmittel (29) einen wabenförmigen Rotor (8) umfasst, der einen Feuchtigkeitsabsorber mitführt.

4. System gemäß einem der Ansprüche 1 bis 3, **gekennzeichnet dadurch, dass** es angeordnet ist, um zu erlauben, dass Trockenluft, die vom Entfeuchtungsmittel (29) zugeführt wird, gekühlt und in einem Raum zugeführt wird.

5. System gemäß Anspruch 1, umfassend:
eine Entfeuchtungs- und Klimatisierungsvorrichtung, wobei die Vorrichtung einen Entfeuchtungsrotor (8) umfasst, der in der Lage ist die adsorbierte Feuchtigkeit durch Heißluft zu desorbieren, und ein Wärmetauschelement (31),um einen Wärmeaustausch zwischen dem ersten und dem zweiten Durchgang (32, 33) zu bewirken, wobei der erste Durchgang des Wärmetauschers angeordnet ist,
um die Luft, die durch den Entfeuchter getrocknet wurde, hindurchzuführen, um die Luft in einen Raum zuzuführen, angeordnet, um vom Raum zum zweiten Durchgang des Wärmetauschers hindurchzuführen, wobei der zweite Durchgang des Wärmetauschelementes angeordnet ist, um Wasser dazu zuzuführen, wobei der Entfeuchtungsrotor (8) angeordnet ist, um im Entfeuchtungsmittel (29) verwendet zu werden.

## Revendications

1. Système de cogénération d'un moteur à combustion interne, comprenant:
un moteur à combustion interne (1);
une dynamo (4), connectée audit moteur à combustion interne,
un boîtier (24), entourant ledit moteur à combustion interne, le boîtier étant agencé pour être traversé par de l'air de refroidissement;
une partie génératrice de courant (23), incluant la dynamo et le moteur à combustion interne, la partie génératrice de courant étant à l'intérieur dudit boîtier;
une partie déshumidifiante (29) étant agencée pour sécher l'air grâce à un absorbeur d'humidité, l'absorbeur d'humidité étant agencé pour désorber l'eau s'y trouvant grâce à un flux d'air chaud; et
le système étant **caractérisé par** le fait de comprendre en outre un moyen de mélange (28) pour mélanger l'air de refroidissement chauffé lors de son passage à travers ledit boîtier avec le gaz d'échappement dudit moteur à combustion interne et pour fournir le flux d'air chaud mélangé pour la désorption de ladite partie déshumidifiante.

2. Système de cogénération d'un moteur à combustion interne, comprenant:
un moteur à combustion interne (1);
une dynamo (4), connectée audit moteur à combustion interne,
un boîtier (24), entourant ledit moteur à combustion interne, le boîtier étant agencé pour avoir de l'air de refroidissement le traversant;
une partie génératrice de courant (23), incluant une dynamo et le moteur à combustion interne, la partie génératrice de courant étant à l'intérieur dudit boîtier;
une partie déshumidifiante (29) étant agencée pour sécher l'air grâce à un absorbeur d'humidité, l'absorbeur d'humidité étant agencé pour désorber l'eau grâce à un flux d'air chaud; et
le système étant **caractérisé en ce qu'**il comprend en outre un moyen de mélange (28) pour mélanger l'air chauffé par l'échange de chaleur avec le gaz d'échappement dudit moteur à combustion interne avec l'air de refroidissement chauffé lors de son passage à travers ledit boîtier et pour fournir le flux d'air chaud mélangé pour la désorption de ladite partie déshumidifiante.

3. Système selon la revendication 1 ou 2, **caractérisé en ce que** la partie déshumidifiante (29) comprend un rotor en nid d'abeilles (8) porteur d'un absorbeur d'humidité.

4. Système selon l'une quelconque des revendications 1 à 3, **caractérisé en ce qu'**il est agencé pour permettre à l'air sec fourni par la partie déshumidifiante (29) d'être refroidi et délivré dans une pièce.

5. Système selon la revendication 1, comprenant:
un appareil de déshumidification et de conditionnement d'air, ledit appareil comprenant un rotor déshumidificateur (8) capable de désorber l'humidité adsorbée par un air chauffé, et un élément échangeur de chaleur (31) pour effectuer un échange de chaleur entre des premier et second passages (32, 33), le premier passage dudit échangeur de chaleur étant agencé pour faire passer l'air séché par ledit déshumidificateur et le délivrer dans un espace, et agencé pour passer de l'espace au second passage dudit échangeur de chaleur, le second passage dudit élément d'échangeur de chaleur étant agencé pour être fourni en eau, le rotor déshumidificateur (8) est agencé pour être utilisé dans la partie déshumidifiante (29).
